# EUROPEAN PATENT APPLICATION

(11) **EP 4 779 724 A1**
(43) Date of publication of application: **22.07.2026**
(21) Application number: 25218298.5
(22) Date of filing: 25.11.2025
(51) Int. Cl.: H01M 4/66, H01M 4/70, H01M 10/04, H01M 10/0587, H01M 50/107, H01M 50/186, H01M 50/474, H01M 50/486, H01M 50/533, H01M 50/536, H01M 50/586, H01M 50/595

(54) **BATTERY CELL, BATTERY PACK, AND ELECTRONIC DEVICE**

(30) Priority: 10.12.2024 CN 202423044978 U
(71) Applicant: AESC Japan Ltd., Yokohama-shi, Kanagawa 220-0012 (JP)
(72) Inventor: GUO, Xueqin, Jiangyin City, Wuxi City, Jiangsu Province, 214443 (CN)
(74) Representative: Becker, Eberhard

(57) **Abstract**

A battery cell (1), a battery pack (100), and an electronic device (1000) are provided. The battery cell (1) includes: a housing (10); an electrode assembly (20) received in the housing (10) and comprising a winding structure (201) formed by winding a positive electrode sheet (21), a separator (22), and a negative electrode sheet (23); a first negative electrode surface (23101) and a second negative electrode surface (23102) of a negative electrode current collector (231) of the negative electrode sheet (23) are respectively covered with a first and a second negative electrode current collectors (23111, 23112). A region at a surface of the second negative electrode current collector (23112) that is away from the center hole (2011) and located between a first position (236) and a second position (237) of the negative electrode sheet (23) is a preset region (K) and is provided with a first insulating layer (25).

## Description

### BACKGROUND OF THE INVENTION

### Field of the Invention

The invention relates to a battery cell, a battery pack, and an electronic device.

### Description of Related Art

In recent years, with the rapid development of electric vehicles, consumer electronics, and new energy storage systems, battery techniques have become an important factor in the development of electric vehicles.

In the development of battery techniques, how to improve battery safety is one technical issue that needs to be solved urgently.

### SUMMARY OF THE INVENTION

The technical issue to be solved by the invention is to overcome the above technical issue of the prior art and to provide a battery cell, a battery pack, and an electronic device.

The invention solves the above technical issue via the following technical solution:
a battery cell, including:
a housing;
an electrode assembly received in the housing, the electrode assembly including a winding structure formed by stacking and winding a positive electrode sheet, a separator, and a negative electrode sheet;
the negative electrode sheet includes a negative electrode current collector and a negative electrode active material layer, the negative electrode current collector includes a first negative electrode surface and a second negative electrode surface disposed along a thickness direction, the negative electrode active material layer includes a first negative electrode active material layer and a second negative electrode active material layer, the first negative electrode active material layer covers a partial region of the first negative electrode surface, the second negative electrode active material layer covers a partial region of the second negative electrode surface, and the first negative electrode surface is disposed along a radial direction of the winding structure toward a center hole of the winding structure;
along a winding direction of the winding structure, the negative electrode sheet includes, in sequence, a negative electrode sheet starting end, a first position, a second position, and a negative electrode sheet finishing end, the positive electrode sheet includes, in sequence, a positive electrode sheet starting end and a positive electrode sheet finishing end, and no positive electrode sheet is correspondingly disposed at a side away from the center hole from the first position through the second position to the negative electrode sheet finishing end; along the radial direction of the winding structure, the first position and the second position are respectively located on a connecting line between the positive electrode sheet finishing end and the center point of the center hole, and an extension line of the connecting line, and both the first position and the second position are adjacent to the positive electrode sheet finishing end;
wherein a group margin of the battery cell is 94% to 99%, a region at a surface of the second negative electrode active material layer that is away from the center hole and located between the first position and the second position is a preset region, and the preset region is continuously provided with a first insulating layer along the winding direction.

In this technical solution, by continuously providing the first insulating layer at the preset region along the winding direction, lithium ions may be prevented from diffusing in the preset region of the negative electrode sheet to the outside of the region away from the center hole, thereby avoiding lithium deposition at the surface of the outermost second negative electrode active material layer away from the center hole, avoiding the safety issue caused by lithium deposition, and significantly improving the safety performance of the battery cell.

Preferably, a side of the first insulating layer in a width direction exceeds or is aligned with a side of the second negative electrode active material layer close to a positive electrode tab;
the group margin is a ratio of a maximum diameter of the electrode assembly to a maximum diameter of the housing when the battery cell is in a fully discharged state.

Preferably, along a height direction of the winding structure, a width of the first insulating layer is 12.5% to 37.5% of a width of the preset region; or,
an area of the first insulating layer is 4% to 10% of an area of the preset region.

Preferably, at a surface of the second negative electrode active material layer facing away from the center hole, the first insulating layer is at least partially disposed between the second position and the negative electrode sheet finishing end.

Preferably, the first insulating layer includes a first substrate and a first adhesive layer located at a surface of the first substrate, and a material of the first substrate is PET or PI; and/or,
a number of the first insulating layer located at the preset region is one.

Preferably, the outermost electrode assembly further includes an insulating film, and along the radial direction of the winding structure, orthographic projections of the insulating film and the first insulating layer are not overlapped;
the insulating film includes a second substrate and a second adhesive layer located at a surface of the second substrate, and a material of the second substrate is PET or PI.

Preferably, the positive electrode sheet includes a positive electrode current collector, and along a height direction of the winding structure, the positive electrode current collector includes a positive electrode coated region covered by the positive electrode active material layer and a positive electrode uncoated region not covered by the positive electrode active material layer, and the negative electrode current collector includes a negative electrode coated region covered by the negative electrode active material layer and a negative electrode uncoated region not covered by the negative electrode active material layer;
the positive electrode uncoated region includes a positive electrode tab and a positive electrode connecting region connected between the positive electrode tab and the positive electrode coated region; the negative electrode uncoated region includes a negative electrode tab and a negative electrode connecting region connected between the negative electrode tab and the negative electrode coated region;
wherein at least a portion of the positive electrode connecting region is covered with a second insulating layer; and/or, at least a partial region of the negative electrode connecting region is covered with a third insulating layer.

Preferably, the housing includes a surrounding sidewall, an end of the sidewall is formed with an opening; an end of the housing close to the opening includes a crimping portion recessed toward an interior of the housing;
the battery cell further includes:
a cover plate mounted at the opening;
an insulating seal, wherein the insulating seal is arranged around a periphery of the cover plate to insulate and seal the cover plate and the housing;
a current collecting plate disposed between the electrode assembly and the cover plate and electrically connected to the housing, wherein a connecting piece of the current collecting plate is located at a side of the crimping portion facing the electrode assembly and welded to the crimping portion;
   and/or,
the battery cell is a cylindrical battery;
   and/or,
a maximum diameter of the housing is 40 mm to 50 mm, and when the battery cell is in a fully discharged state, a minimum distance between an outer periphery of the electrode assembly and an inner surface of the housing is in a range of 0.2 mm to 0.8 mm.

A battery pack includes the battery cell described above.

An electronic device includes the battery pack described above.

The positive progress effect of the invention is:
when the group margin of the battery cell is 94% to 99%, since there is no positive electrode sheet at a side of the outermost negative electrode sheet (the region of the negative electrode sheet from the first position to the second position to the negative electrode sheet finishing end) facing away from the center hole, there is no corresponding positive electrode active material layer. At this time, since the group margin is larger, the distance between the outermost negative electrode sheet and the inner surface of the housing is closer. During the expansion process of battery charging and discharging, lithium ions in the positive electrode active material layer of the outermost positive electrode sheet jump to the outside of the outermost negative electrode sheet, causing lithium deposition safety issue.

The first position and the second position of the negative electrode sheet are both located on the connecting line between the positive electrode sheet finishing end and the center hole, and the first position and the second position are both adjacent to the positive electrode sheet finishing end. Since the first position and the second position are sequentially disposed along the winding direction on the negative electrode sheet, and the first position and the second position are respectively located on the connecting line between the positive electrode sheet finishing end and the center hole, and the extension line of the connecting line, the first position and the second position are both radially adjacent to the positive electrode sheet finishing end, that is, the first position is located on the connecting line between the positive electrode sheet finishing end and the center point of the center hole, and located at a position adjacent to the side of the positive electrode sheet finishing end close to the center hole; the second position is located on the extension line of the connecting line between the positive electrode sheet finishing end and the center point of the center hole, and located at a position adjacent to a side of the positive electrode sheet finishing end away from the center hole; the negative electrode sheet is wound from the first position to the second position to form exactly one turn.

The invention prevents lithium ions from diffusing from the preset region of the negative electrode sheet to the outside of the region away from the center hole by continuously providing the first insulating layer at the surface of the second negative electrode active material layer away from the center hole and in the preset region between the first position and the second position, thereby avoiding lithium deposition at the surface of the outermost second negative electrode active material layer away from the center hole, avoiding safety issue caused by lithium deposition, and significantly improving the safety performance of the battery cell. In particular, the second negative electrode active material layer covers a partial region of the second negative electrode surface of the negative electrode collector. Along the radial direction of the winding structure, the second negative electrode surface is disposed at a side of the negative electrode collector away from the center hole of the winding structure.

### BRIEF DESCRIPTION OF THE DRAWINGS

FIG. 1 is a schematic cross-sectional view of the structure of a battery cell of a preferred embodiment of the invention.
FIG. 2 is a schematic view of the partially enlarged structure of portion A in FIG. 1.
FIG. 3 is a schematic view of a partially enlarged structure of portion B in FIG. 1.
FIG. 4 is a schematic view of the three-dimensional structure of an electrode assembly of a battery cell of a preferred embodiment of the invention.
FIG. 5 is a schematic cross-sectional view of the structure of an electrode assembly of a battery cell of a preferred embodiment of the invention.
FIG. 6 is a schematic view of the partially enlarged structure of portion C in FIG. 5.
FIG. 7 is a schematic partial cross-sectional view of the structure of an electrode assembly of a battery cell of a preferred embodiment of the invention from another angle.
FIG. 8 is a schematic view of the partially enlarged structure of portion E in FIG. 7.
FIG. 9 is a schematic view of a partially enlarged structure of portion F in FIG. 7.
FIG. 10 is a schematic partial cross-sectional view of the structure of a single-turn positive electrode sheet of a battery cell of a preferred embodiment of the invention.
FIG. 11 is a schematic partial cross-sectional view of the structure of a single-turn negative electrode sheet of a battery cell of a preferred embodiment of the invention.
FIG. 12 is a schematic view of the partial structure of the negative electrode sheet of a battery cell of a preferred embodiment of the invention when unfolded.
FIG. 13 is a schematic view of the structure of a battery pack of a preferred embodiment of the invention.
FIG. 14 is a schematic view of the structure of an electronic device of a preferred embodiment of the invention.

### DESCRIPTION OF THE EMBODIMENTS

A preferred embodiment is given below, and the invention is described more clearly and completely in conjunction with the accompanying drawings.

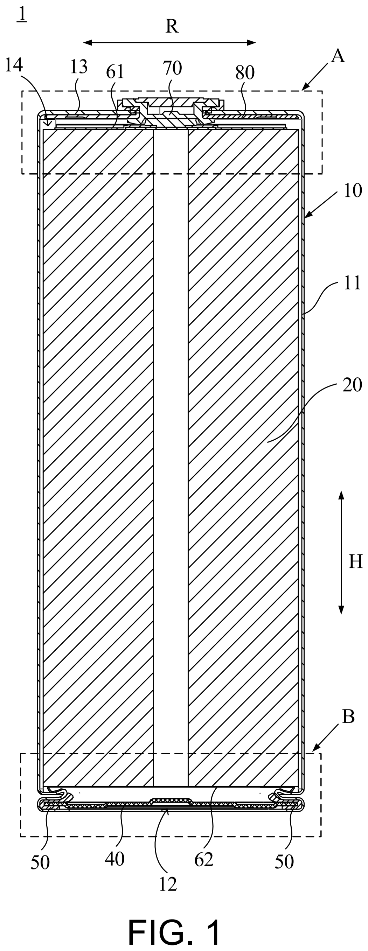

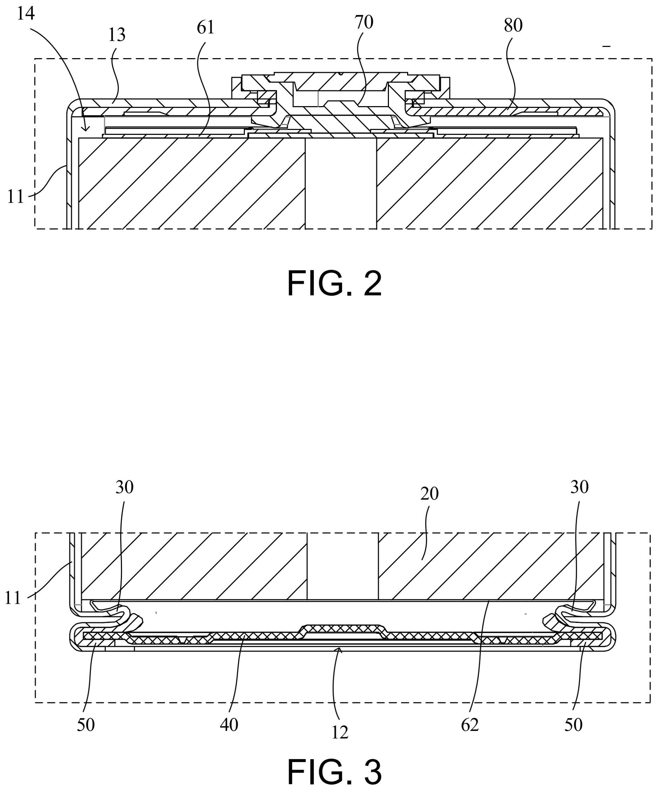

As shown in FIG. 1 to FIG. 3, the present embodiment provides a battery cell 1. The battery cell 1 includes a housing 10 and an electrode assembly 20. The electrode assembly 20 is received in the housing 10.

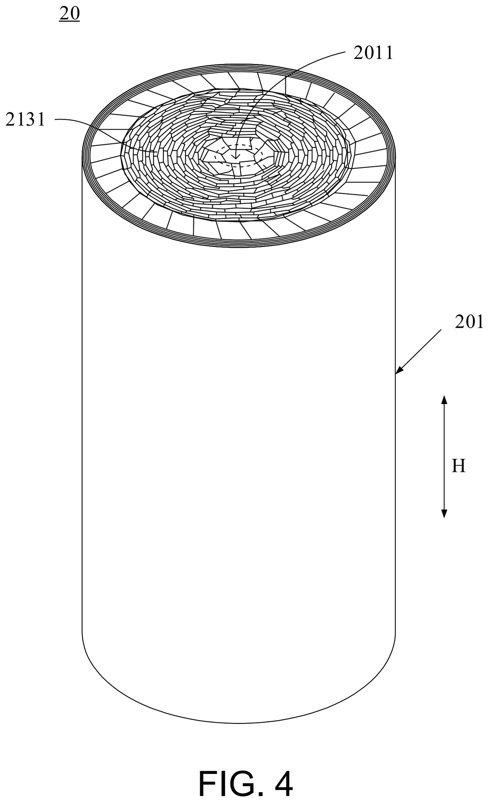

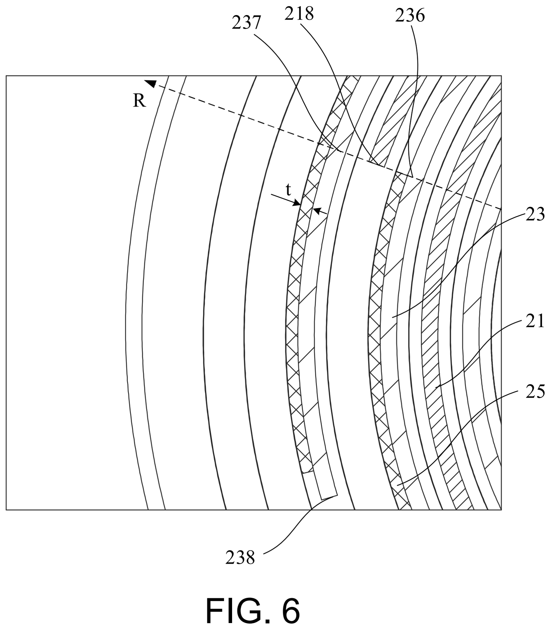

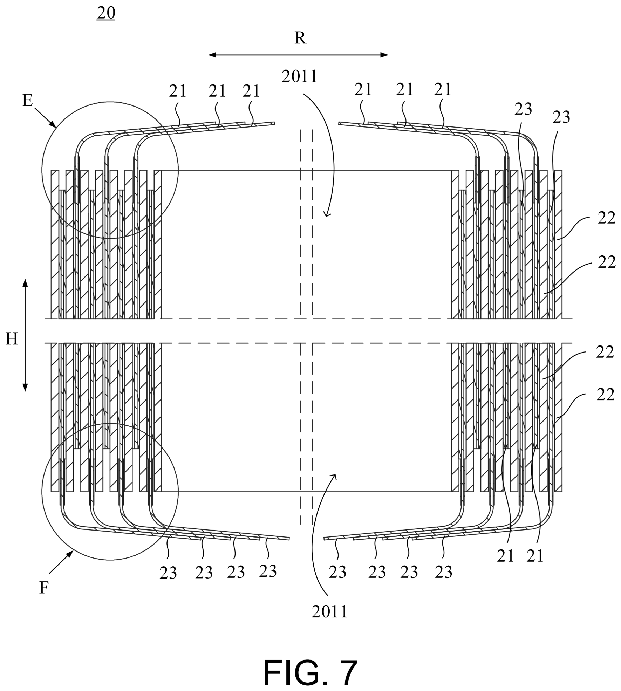

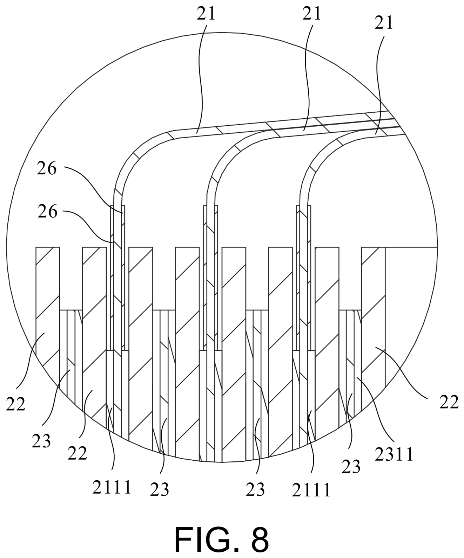

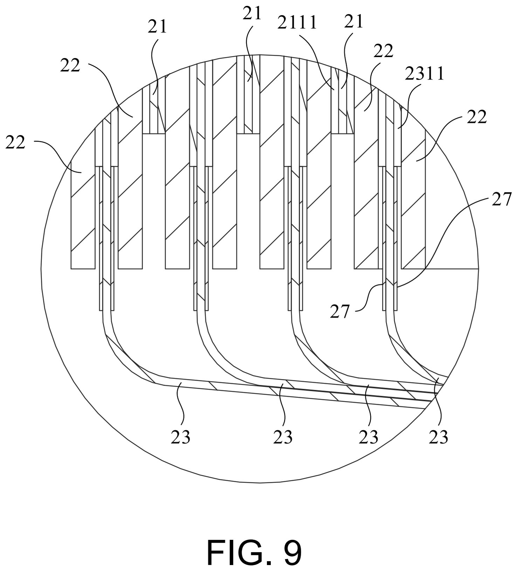

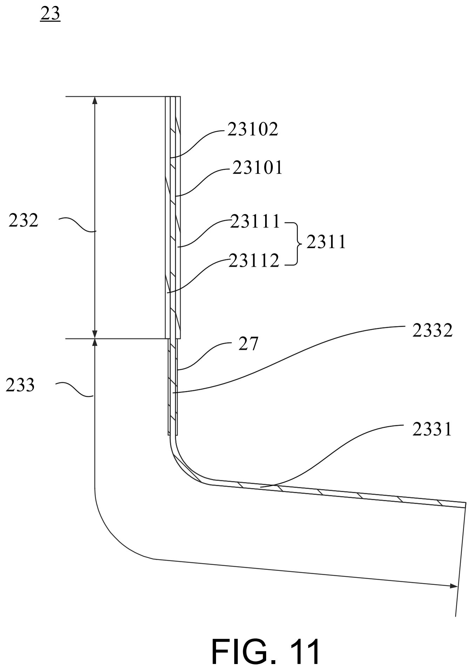

As shown in FIG. 4 to FIG. 12, the electrode assembly 20 is a winding structure 201 formed by stacking and winding a positive electrode sheet 21, a separator 22, and a negative electrode sheet 23.

The negative electrode sheet 23 includes a negative electrode current collector 231 and a negative electrode active material layer 2311. The negative electrode current collector 231 includes a first negative electrode surface 23101 and a second negative electrode surface 23102 disposed along the thickness direction. The negative electrode active material layer 2311 includes a first negative electrode active material layer 23111 and a second negative electrode active material layer 23112. The first negative electrode active material layer 23111 covers a partial region of the first negative electrode surface 23101, and the second negative electrode active material layer 23112 covers a partial region of the second negative electrode surface 23102. The first negative electrode surface 23101 is disposed along a radial direction R of the winding structure 201 toward a center hole 2011 of the winding structure 201, and the second negative electrode surface 23102 is disposed away from the center hole 2011.

Along a winding direction P of the winding structure 201, the negative electrode sheet 23 sequentially includes a negative electrode sheet starting end 235, a first position 236, a second position 237, and a negative electrode sheet finishing end 238. The positive electrode sheet 21 sequentially includes a positive electrode sheet starting end 217 and a positive electrode sheet finishing end 218. There is no corresponding positive electrode sheet 21 at a side away from the center hole 2011 from the first position 236 through the second position 237 to the negative electrode sheet finishing end 238. Along the radial direction R of the winding structure 201, the first position 236 and the second position 237 are respectively located on the connecting line between the positive electrode sheet finishing end 218 and the center point of the center hole 2011, and the extension line of the connecting line, and the first position 236 and the second position 237 are both adjacent to the positive electrode sheet finishing end 218.

In particular, the group margin of the battery cell 1 is 94% to 99%. The region at the surface of the second negative electrode active material layer 23112 that is away from the center hole 2011 and located between the first position 236 and the second position 237 is a preset region K, and the preset region K is continuously provided with the first insulating layer 25 along the winding direction P.

It should be noted that when the group margin of the battery cell 1 is 94% to 99%, since there is no positive electrode sheet 21 at a side of the outermost negative electrode sheet 23 (the region of the negative electrode sheet 23 from the first position 236 through the second position 237 to the negative electrode sheet finishing end 238) away from the center hole 2011, there is no corresponding positive electrode active material layer 2111. At this time, since the group margin is larger, the distance between the outermost negative electrode sheet 23 and the inner surface of the housing 10 is closer. During the expansion process of battery charging and discharging, lithium ions in the positive electrode active material layer 2111 of the outermost positive electrode sheet 21 jump to the outside of the outermost negative electrode sheet 23, causing lithium deposition safety issue. In addition, since the first position 236 and the second position 237 are sequentially disposed along the winding direction P on the negative electrode sheet 23, and the first position 236 and the second position 237 are respectively located on the connecting line between the positive electrode sheet finishing end 218 and the center hole 2011, and the extension line of the connecting line, the first position 236 and the second position 237 are both adjacent to the positive electrode sheet finishing end 218 in the radial direction R, that is, the first position 236 is located on the connecting line between the positive electrode sheet finishing end 218 and the center point of the center hole 2011, and located at a position adjacent to a side of the positive electrode sheet finishing end 218 close to the center hole 2011; the second position 237 is located on the extension line of the connecting line between the positive electrode sheet finishing end 218 and the center point of the center hole 2011, and located at a position adjacent to a side of the positive electrode sheet finishing end 218 away from the center hole 2011; the negative electrode sheet 23 is wound from the first position 236 to the second position 237 to form exactly one turn.

The present embodiment prevents lithium ions from diffusing from the preset region K to the outside of the region away from the center hole 2011 by continuously providing the first insulating layer 25 at the preset region K along the winding direction P, thereby avoiding lithium deposition at the surface of the outermost second negative electrode active material layer 23112 away from the center hole 2011, avoiding safety issue caused by lithium deposition, and significantly improving the safety performance of the battery cell 1. In particular, the portion between the first position 236 and the second position 237 of the negative electrode sheet 23 includes the first position 236, the second position 237, and all positions located between the first position 236 and the second position 237. The second negative electrode surface 23102 of the negative electrode current collector 231 is disposed away from the center hole 2011, that is, the second negative electrode surface 23102 is disposed toward the housing 10.

It should also be noted that the outermost negative electrode sheet 23 may be one or a plurality. Regardless of whether it is one or a plurality, as long as the first insulating layer 25 is continuously provided along the winding direction P at the preset region K closest to the positive electrode sheet finishing end 218, the effect of preventing lithium ions from diffusing from the preset region K to the outside of the region away from the center hole 2011 may be achieved. For turns farther from the positive electrode sheet tailing end 218, the probability of lithium ions jumping there is lower due to the longer distance. Moreover, regardless of whether the first insulating layer 25 is disposed at the middle position of the second negative electrode active material layer 23112 in the height direction of the preset region K, or close to the edge position of the second negative electrode active material layer 23112, as long as the first insulating layer 25 is continuously provided along the winding direction P at the preset region K, one insulating structure continuously provided along the winding direction P may be formed, thereby achieving the effect of preventing lithium ions from diffusing from the preset region K to the outside of the region away from the center hole 2011.

Furthermore, at the surface of the second negative electrode active material layer 23112 away from the center hole 2011, the first insulating layer 25 is at least partially disposed between the second position 237 and the negative electrode sheet finishing end 238 to prevent lithium ions from diffusing from the region between the second position 237 and the negative electrode sheet finishing end 238 of the negative electrode sheet 23 to the outside of the region away from the center hole 2011 to further achieve the beneficial technical effect of reducing the amount of lithium desorption of the positive electrode sheet 21 of the corresponding region. In particular, the region between the second position 237 and the negative electrode sheet finishing end 238 includes the second position 237, the negative electrode sheet finishing end 238, and all positions located between the second position 237 and the negative electrode sheet finishing end 238.

The number of the first insulating layer 25 located at a preset region K is one. That is, at the surface of the second negative electrode active material layer 23112 away from the center hole 2011, and in the region between the first position 236 and the second position 237, the number of first insulating layers 25 disposed is one, so that the first insulating layer 25 is one continuous integrated structure to ensure one continuous insulation performance thereof along the winding direction P.

Furthermore, in the present embodiment, the first insulating layer 25 disposed between the second position 237 and the negative electrode sheet finishing end 238 is a continuous structure, and is connected to the first insulating layer 25 disposed in the preset region K, so that the first insulating layer 25 forms one continuous integrated structure. The continuous integrated structure starts from the first position 236, passes through the second position 237, and ends at the end position before the negative electrode sheet finishing end 238, that is, the number of first insulating layers 25 is one. The integrated structure is wound at least once from the first position 236 to the negative electrode sheet end 238. In other embodiments, the end position of the first insulating layer 25 may also be overlapped with the negative electrode sheet finishing end 238.

However, the invention is not limited thereto. In other embodiments, the first insulating layer 25 disposed only between the second position 237 and the negative electrode sheet finishing end 238 may be a multi-segment structure disposed at intervals.

Preferably, a side of the first insulating layer 25 along the width direction (denoted as a first side 251) exceeds or is aligned with a side of the second negative electrode active material layer 23112 close to a positive electrode tab 2131, and another side of the first insulating layer in the width direction (denoted as a second side 252) is extended toward another side of the second negative electrode active material layer 23112, so as to better prevent lithium ions from diffusing from the preset region K to the outside of the region away from the center hole 2011, thereby reducing the amount of lithium desorption of the positive electrode sheet 21 of the corresponding region, thereby avoiding safety issue caused by lithium deposition and significantly improving the safety performance of the battery cell. The width direction of the first insulating layer 25 is in the same direction as a height direction H of the winding structure 201. Similarly, the first insulating layer 25 located between the second position 237 and the negative electrode sheet finishing end 238 also has a first side 251 extended beyond or aligns with a side of the second negative electrode active material layer 23112 close to the positive electrode tab 2131, and a second side 252 extended toward another side of the second negative electrode active material layer 23112.

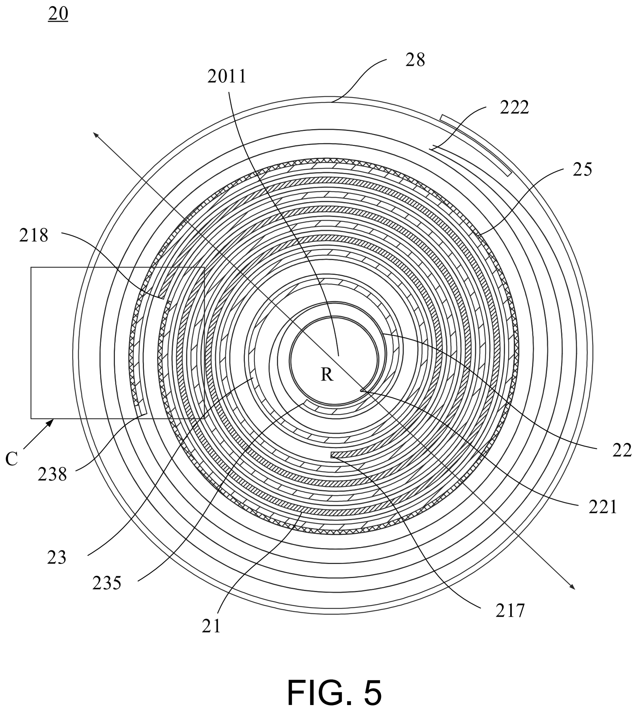

Please refer to FIG. 5 again. The outermost electrode assembly 20 further includes an insulating film 28. Along the radial direction R of the winding structure 201, the orthographic projections of the insulating film 28 and the first insulating layer 25 are not overlapped. That is, along the height direction H of the winding structure 201, a portion of the winding structure 201 is covered with the insulating film 28, and the insulating film 28 and the first insulating layer 25 are staggered to avoid overlapping thicknesses of the electrode assembly 20 and affecting the diameter of the electrode assembly 20, thereby improving energy density. In addition, the insulating film 28 also plays a role in fixing the outer separator 22 to prevent the separator 22 from loosening. The insulating film 28 may be made of PP, PE, PET, PVC, PI, or other high molecular polymer materials. The separator 22 includes a separator starting end 221 and a separator finishing end 222. The insulating film 28 includes, but is not limited to, a finishing tape for fixing the finishing end of the separator 22. That is, the insulating film 28 may be a finishing tape, or other insulating structures, such as a mylar film. Regardless of the structure of the insulating film 28, the orthographic projection thereof along the radial direction R of the winding structure 201 is not overlapped with the orthographic projection of the first insulating layer 25.

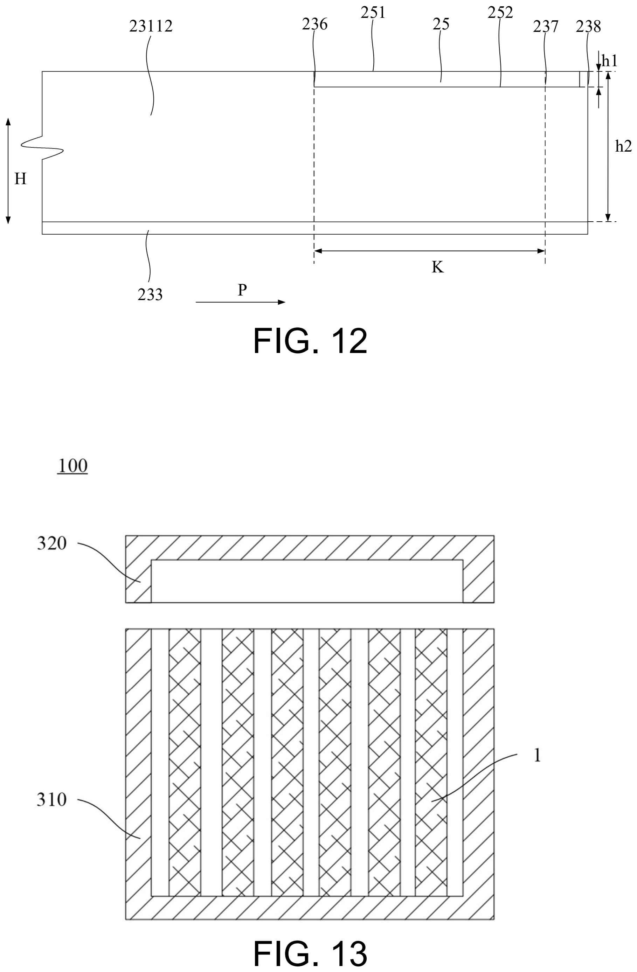

Please refer to FIG. 12 again. Specifically, along the height direction H of the winding structure 201, a width h1 of the first insulating layer 25 is 5 mm to 15 mm, for example, 5 mm, 7 mm, 10 mm, 13.5 mm, or 15 mm, etc. In this way, by setting the value range of the width h1 of the first insulating layer 25, on the one hand, the width h1 of the first insulating layer 25 may be prevented from being too large and affecting the energy density of the battery; on the other hand, the width h1 of the first insulating layer 25 may be prevented from being too small so that the effect of preventing the diffusion of lithium ions may not be achieved.

Along the height direction H of the winding structure 201, the width h1 of the first insulating layer 25 is 12.5% to 37.5% of a width h2 of the preset region K, for example, 12.5%, 17.5%, 25%, 30%, or 37.5%, etc. In this way, by setting the relationship between the width h1 of the first insulating layer 25 and the width h2 of the preset region K, on the one hand, the width h1 of the first insulating layer 25 may be prevented from being too large and affecting the energy density of the battery; on the other hand, the width h1 of the first insulating layer 25 may be prevented from being too small, so that the effect of preventing the diffusion of lithium ions may not be achieved.

The area of the first insulating layer 25 is 4% to 10% of the area of the preset region K. In this way, by setting the relationship between the area of the first insulating layer 25 and the area of the second negative electrode surface 23102, on the one hand, the area of the first insulating layer 25 may be prevented from being too large and affecting the energy density of the battery; on the other hand, the area of the first insulating layer 25 may be prevented from being too small, so that the effect of preventing the diffusion of lithium ions may not be achieved.

A thickness t of the first insulating layer 25 is 10 *µ*m to 65 *µ*m, for example, 10 *µ*m, 25 *µ*m, 37.5 *µ*m, 53.5 *µ*m, or 65 *µ*m, etc. In this way, by setting the value range of the thickness t of the first insulating layer 25, on the one hand, the thickness t of the first insulating layer 25 may be prevented from being too large and affecting the energy density of the battery; on the other hand, the thickness t of the first insulating layer 25 may be prevented from being too small, so that the function of preventing the diffusion of lithium ions may not be achieved.

In the present embodiment, the first insulating layer 25 includes a first substrate and a first adhesive layer located at the surface of the first substrate. The material of the first substrate is PET (polyethylene terephthalate). However, the invention is not limited thereto. In other embodiments, the material of the first substrate of the first insulating layer 25 may also be other insulating materials, such as PI (polyimide). The insulating film 28 includes a second substrate and a second adhesive layer located at the surface of the second substrate. The material of the second substrate is PET or PI.

When the battery cell 1 is in a fully discharged state, the group margin is the ratio of the maximum diameter of the electrode assembly 20 to the maximum inner diameter of the housing 10, and the inner diameter of the housing is the diameter of the cavity inside the housing 10. In particular, the fully discharged state refers to the state when the SOC of a battery cell is close to 0% SOC. SOC (state of charge) refers to the state of charge of the battery. SOC refers to the percentage of the capacity that may be released in the current battery under the specified discharge conditions to the available capacity. Available capacity refers to the maximum amount of electricity that the battery may release under specified charging and discharging conditions, that is, the remaining power of the battery. When the battery cell 1 is at 0% SOC, that is, the battery cell 1 is in a fully discharged state, but when some batteries are fully discharged, the SOC may be slightly greater than 0%. At this time, the charge state slightly greater than 0% SOC is the fully discharged state of the battery cell at this time. For finished battery cells, the empty state is the rated capacity obtained from the nameplate of the battery cell 1 when leaving the factory. Then, the battery cell 1 is first charged to a fully charged state at a charging rate of 0.33C. When the charging current is decreased to 0.01C, charging is considered to be terminated and the battery is in a fully charged state (for example, the fully charged state is the state corresponding to when the battery cell 1 may be charged to the rated capacity). The fully discharged state is the state when the battery cell 1 has released the capacity indicated by the rated capacity, and the discharge rate may be selected as 0.33C. For example, a 42Ah cylinder may be charged at a current of 0.33C, and the current is cut off when fully charged (that is, charging is terminated when the charging current is decreased to 0.01C). Then, the cylinder is discharged at a rate of 0.33C. When 42Ah of capacity is released, the cylinder is in a fully discharged state. In some specific experiments, in order to quickly determine the empty state, for battery cells containing silicon negative electrodes, the cut-off voltage may be set to 2.5 V to indicate the empty state. For negative electrodes made of only carbon materials, the cut-off voltage may be set to 2.75 V to indicate the empty state.

Preferably, the positive electrode sheet 21 includes the positive electrode current collector 211. Along the height direction H of the winding structure 201, the positive electrode current collector 211 includes a positive electrode coated region 212 covered by the positive electrode active material layer 2111 and a positive electrode uncoated region 213 not covered by the positive electrode active material layer 2111. The negative electrode current collector 231 includes a negative electrode coated region 232 covered by the negative electrode active material layer 2311 and a negative electrode uncoated region 233 not covered by the negative electrode active material layer 2311. The positive electrode uncoated region 213 includes the positive electrode tab 2131 and a positive electrode connecting region 2132 connected between the positive electrode tab 2131 and the positive electrode coated region 212; the negative electrode uncoated region 233 includes a negative electrode tab 2331 and a negative electrode connecting region 2332 connected between the negative electrode tab 2331 and the negative electrode coated region 232. In particular, at least a partial region of the positive electrode connecting region 2132 is covered with a second insulating layer 26; and at least a partial region of the negative electrode connecting region 2332 is covered with a third insulating layer 27.

In this way, by providing the second insulating layer 26, the deformation risk of the positive electrode connecting region 2132 may be reduced, and the insulation performance of the positive electrode connecting region 2132 may be improved, thereby significantly improving the safety and the reliability of the battery performance; by disposing the third insulating layer 27, the deformation risk of the negative electrode connecting region 2332 may be reduced, and the insulation performance of the negative electrode connecting region 2332 may be improved, thereby significantly improving the safety and the reliability of the battery performance. The second insulating layer 26 and the first insulating layer 25 are at least partially overlapped at the position of the corresponding radial direction R to make the region tighter and avoid misalignment of the positive electrode sheet 21 and the negative electrode sheet 23 during vibration use of the battery and causing the positive electrode sheet 21 and the negative electrode sheet 23 to be in contact with each other and causing a short circuit, thereby improving safety.

In other embodiments, only at least a partial region of the positive electrode connecting region 2132 may be covered with the second insulating layer 26, or only at least a partial region of the negative electrode connecting region 2332 may be covered with the third insulating layer 27.

Specifically, the positive electrode connecting region 2132 includes a first side surface facing away from the center hole 2011 along the radial direction R of the winding structure 201 and a second side surface facing the center hole 2011, wherein at least a partial region of both the first side surface and the second side surface is covered with the second insulating layer 26; in this way, by covering at least a partial region of both the first side and the second side of the positive electrode connecting region 2132 with the second insulating layer 26, the deformation risk of the positive electrode connecting region 2132 may be effectively reduced, and the insulation performance of the positive electrode connecting region 2132 may be improved, thereby significantly improving the safety and the reliability of the battery performance. The second insulating layer 26 is mainly composed of boehmite and PVDF (polyvinylidene difluoride). Boehmite accounts for 80%; PVDF accounts for 20%. The thickness of the second insulating layer 26 is 1.5 *µ*m to 2.5 *µ*m, for example, 1.5 *µ*m, 1.7 *µ*m, 2 *µ*m, 2.1 *µ*m, 2.3 *µ*m, or 2.5 *µ*m, etc. By setting the thickness range of the second insulating layer 26, the coating thickness of the second insulating layer 26 may be prevented from being too thin and causing the desired electrical insulation and supporting strength to be difficult to be obtained; at the same time, the second insulating layer 26 may be prevented from being too thick and causing he curing time of the coating layer be to longer and an the thickness of the overall structure to be increased. Preferably, the thickness of the second insulating layer 26 is 2 *µ*m.

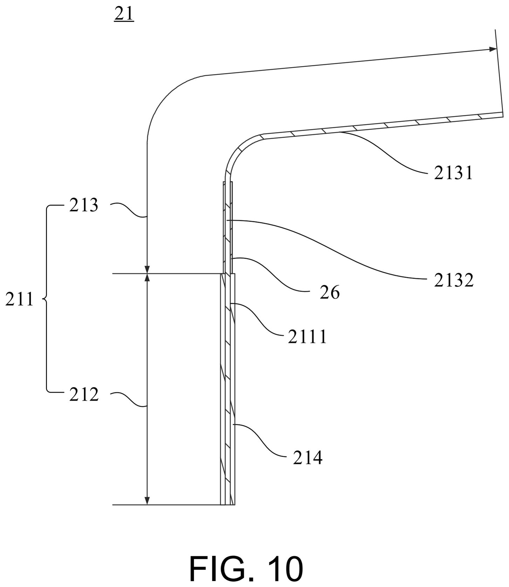

Please refer to FIG. 10 again. In the present embodiment, both the first side surface and the second side surface of the positive electrode connecting region 2132 are covered with the second insulating layer 26. However, the invention is not limited thereto. In other embodiments, only the first side surface of the positive electrode connecting region 2132 may be covered with the second insulating layer 26, or only the second side surface of the positive electrode connecting region 2132 may be covered with the second insulating layer 26. It may be adjusted according to design needs.

The second insulating layer 26 includes a color developer to distinguish a side coated with the second insulating layer 26 as the front or back of the positive electrode sheet 21 via the coloring effect of the color developer, including but not limited to situations such as distinguishing the surface density of the front and back of the positive electrode sheet 21. The main component of the color developer is bismuth vanadate, which is yellow in color.

In the present embodiment, the second side surface of the positive electrode connecting region 2132 may be covered with the second insulating layer 26 containing a color developer, and the second insulating layer 26 containing a color developer appears yellow. The first side of the positive electrode connecting region 2132 is covered with the second insulating layer 26 not containing a color developer. The second insulating layer 2 not containing a color developer appears white, so that the front and back of the positive electrode sheet 21 are different in color, thereby achieving the goal of using the color development effect of the developer in the second insulating layer 26 to quickly distinguish the front and back of the positive electrode sheet 21.

Furthermore, since the first insulating layer 25 usually adopts a color different from white, such as blue, yellow, green, etc., better color difference with the second insulating layer 26 containing a yellow color developer located at the finishing end 218 of the positive electrode sheet may be formed to facilitate the CCD to accurately identify the edge of the first insulating layer 25, effectively preventing the risk of missing the first insulating layer 25, thereby ensuring the yield rate.

Referring further to FIG. 1 to FIG. 3, in the present embodiment, the housing 10 includes a surrounding sidewall 11, and an opening 12 is formed at an end of the sidewall 11. An end of the housing 10 close to the opening 12 includes a crimping portion 30 recessed into the interior of the housing 10. The battery cell 1 further includes a cover plate 40, an insulating seal 50, and a current collecting plate. The cover plate 40 is mounted at the opening 12. The insulating seal 50 is disposed around the periphery of the cover plate 40 to insulate and seal the cover plate 40 and the housing 10. The current collecting plate is disposed between the electrode assembly 20 and the cover plate 40 and electrically connected to the housing 10. The connecting piece of the current collecting plate is located at the side of the crimping portion 30 facing the electrode assembly 20 and welded to the crimping portion 30. In this way, by disposing the connecting piece of the current collecting plate at a side of the crimping portion 30 facing the electrode assembly 20 and welded to the crimping portion 30, that is, the welding region between the current collecting plate and the electrode tab is located at the end closer to the electrode assembly 20 than the crimping portion 30, and therefore the crimping portion 30 may be prevented from affecting the welding region between the electrode tab and the current collecting plate, thereby improving the welding strength between the electrode tab and the current collecting plate.

Furthermore, the housing 10 further includes an end wall 13. The sidewall 11 is disposed around the end wall 13 and located at an end of the sidewall 11 away from the opening 12. The end wall 13 and the sidewall 11 form a receiving chamber 14 in the housing 10 for receiving the electrode assembly 20, the electrolyte, and other necessary battery components. The connection between the end wall 13 and the sidewall 11 may be achieved in various ways, such as integral stamping, integral casting, or separate welding.

The battery cell 1 further includes an electrode pole 70. The electrode pole 70 passes through the end wall 13 and is insulated from the end wall 13 via an insulating member 80.

The current collecting plate includes a first current collecting plate 61 and a second current collecting plate 62, wherein the first current collecting plate 61 is disposed between the electrode assembly 20 and the end wall 13; the second current collecting plate 62 is disposed between the electrode assembly 20 and the cover plate 40. In the present embodiment, the first current collecting plate 61 corresponds to the positive electrode tab 2131, and the positive electrode tab 2131 is electrically connected to the electrode pole 70 via the first current collecting plate 61; the second current collecting plate 62 corresponds to the negative electrode tab 2331, and the negative electrode tab 2331 is electrically connected to the housing 10 via the second current collecting plate 62. However, the invention is not limited thereto. In other embodiments, the first current collecting plate 61 may correspond to the negative electrode tab 2331, and the second current collecting plate 62 may correspond to the positive electrode tab 2131.

The welding sequence of the first current collecting plate 61 and the second current collecting plate 62 of the battery cell 1 in the present embodiment respectively to the electrode assembly 20 is as follows: first, the first current collecting plate 61 is placed; then, the electrode assembly 20 is pressed at both the positive electrode and the negative electrode (the pressing process may increase the contact between the current collecting plate and the electrode assembly 20 and avoid cold welding); the first current collecting plate 61 is welded using linear welding instead of spot welding. This is because the negative electrode tab 2331 is softer. After two presses, the second current collecting plate 62 and the electrode assembly 20 are closer. Spot welding concentrates heat, causing burns to the separator 22. Line welding, on the other hand, generates less heat and may avoid burns to the separator 22, causing short circuit between the positive electrode and the negative electrode. Next, the second current collecting plate 62 is placed; the electrode assembly 20 is pressed again at both the positive electrode and the negative electrode; lastly, the second current collecting plate 62 is welded.

In the present embodiment, the battery cell 1 is a cylindrical battery. Cylindrical batteries have the advantages of high energy density, long cycle life, and good safety performance. However, the invention is not limited thereto. In other embodiments, the battery cell 1 may also be a battery of other shapes such as a square battery.

Applying the specific structure of the first insulating layer 25 in the present embodiment to cylindrical batteries may prevent lithium ions from diffusing from the preset region K of the negative electrode sheet 23 to the outside of the region away from the center hole 2011, thereby reducing the amount of lithium desorption from the positive electrode sheet 21 of the corresponding region, thereby avoiding safety issue caused by lithium deposition and significantly improving the safety performance of the battery cell.

In particular, since the cylindrical electrode assembly 20 of the cylindrical battery pursues the ultimate energy density, the electrode sheet is expanded slightly, thereby reducing the distance between the electrode sheets. Furthermore, since the cylindrical battery housing 10 is usually made of a steel housing with higher strength, the cylindrical steel housing has a greater constraint on the electrode assembly 20 than the housing 10 made of other materials, further leading to a smaller distance between the electrode sheet layers, making it more likely to cause lithium deposition issue. The design of the first insulating layer 25 of the present embodiment may prevent lithium ions from diffusing from the preset region K of the negative electrode sheet 23 to the outside of the region away from the center hole 2011 to better address the issue of lithium deposition of cylindrical batteries due to the small distance between the electrode sheet layers, thereby improving the safety thereof.

Specifically, the maximum diameter of the housing 10 is 40 mm to 50 mm. When the battery cell 1 is in a fully discharged state, the minimum distance between the outer periphery of the electrode assembly 20 and the inner surface of the housing 10 is in the range of 0.2 mm to 0.8 mm. As mentioned above, on the one hand, since the cylindrical electrode assembly 20 of cylindrical batteries pursues the ultimate energy density, the assembly gap may not be too large. Therefore, under the condition that the maximum diameter of the housing 10 is 40 mm to 50 mm, the minimum distance between the outer periphery of the electrode assembly 20 and the inner surface of the housing 10 is controlled to be less than or equal to 0.8 mm to prevent the electrode assembly 20 from being too small and affecting the energy density of the battery cell. On the other hand, if the minimum distance between the outer periphery of the electrode assembly 20 and the inner surface of the housing 10 is less than 0.2 mm, not only is the lithium deposition of the outermost negative electrode sheet 23 more significant, but also, during the process assembly, due to the smaller assembly gap and the high housing insertion diameter requirement of the electrode assembly 20, poor housing insertion readily occurs. As may be seen from the above, by controlling the minimum distance between the outer periphery of the electrode assembly 20 and the inner surface of the housing 10 to be in the range of 0.2 mm to 0.8 mm, the battery cell 1 may achieve the optimal energy density while meeting the assembly clearance requirement.

As shown in FIG. 13, the invention further provides a battery pack 100. The battery pack 100 includes the battery cell 1. In an embodiment of the battery pack 100 of the invention, the battery pack 100 includes a case 310, a case cover 320, and a plurality of battery cells 1. The plurality of battery cells 1 are placed in the case 310 and connected in series or in parallel, or in a mixture of series and parallel. The case cover 320 is sealed on the case 310 to protect the plurality of battery cells 1. It should be noted that, in addition to the battery cell 1 of the invention, the battery pack 100 may also include a battery pack 100 thermal management system, a circuit board, and other parts. The battery pack 100 may be a battery module or a battery pack, an energy storage cabinet, etc., which is not explained one by one here.

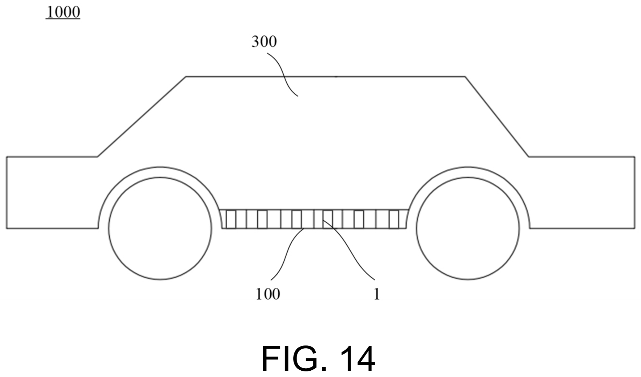

As shown in FIG. 14, the invention further provides an electronic device 1000. The electronic device 1000 includes the battery pack 100. A working unit 300 is electrically connected to the battery pack 100 to obtain power support. As one example, the electronic device 1000 is a vehicle, and the vehicle may be a fuel vehicle, a gas vehicle, or a new energy vehicle. The new energy vehicle may be a pure electric vehicle, a hybrid vehicle, or an extended-range vehicle, etc., but is not limited thereto. The working unit 300 is the vehicle body, and the battery pack 100 is disposed at the bottom of the vehicle body and provides power support for the driving of the vehicle or the operation of electrical components in the vehicle. However, in some other embodiments, the electronic device 1000 may also be a mobile phone, a portable device, a laptop computer, a ship, a spacecraft, an electric toy, an electric tool, and the like. The spacecraft includes aircraft, rockets, space shuttles, spacecraft, etc.; the working unit 300 may be a unit component that may obtain electric energy from the battery pack 100 and perform corresponding work, such as a blade rotating unit of a fan, a dust collecting unit of a vacuum cleaner, etc. The electric toy includes fixed or mobile electric toys, such as game consoles, electric car toys, electric ship toys, and electric airplane toys, etc. The power tool includes metal cutting power tools, grinding power tools, assembly power tools, and railway power tools, such as electric drills, electric grinders, electric wrenches, electric screwdrivers, electric hammers, impact drills, concrete vibrators, and electric planers, etc. The embodiments of the present application do not impose any special limitation on the electronic device 1000.

## Claims

1. A battery cell (1), comprising:
a housing (10);
an electrode assembly (20) received in the housing (10), the electrode assembly (20) comprising a winding structure (201) formed by stacking and winding a positive electrode sheet (21), a separator (22), and a negative electrode sheet (23);
the negative electrode sheet (23) comprises a negative electrode current collector (231) and a negative electrode current collector (2311), the negative electrode current collector (231) comprises a first negative electrode surface (23101) and a second negative electrode surface (23102) disposed along a thickness direction, the negative electrode current collector (2311) comprises a first negative electrode current collector (23111) and a second negative electrode current collector (23112), the first negative electrode current collector (23111) covers a partial region of a first negative electrode surface (23101), the second negative electrode current collector (23112) covers a partial region of the second negative electrode surface (23102), and the first negative electrode surface (23101) is disposed along a radial direction (R) of the winding structure (201) toward a center hole (2011) of the winding structure (201);
along a winding direction (P) of the winding structure (201), the negative electrode sheet (23) comprises, in sequence, a negative electrode sheet starting end (235), a first position (236), a second position (237), and a negative electrode sheet finishing end (238), the positive electrode sheet (21) comprises, in sequence, a positive electrode sheet starting end (217) and a positive electrode sheet finishing end (218), and no positive electrode sheet (21) is correspondingly disposed at a side away from the center hole (2011) from the first position (236) through the second position (237) to the negative electrode sheet finishing end (238); along the radial direction (R) of the winding structure (201), the first position (236) and the second position (237) are respectively located on a connecting line between the positive electrode sheet finishing end (218) and a center point of the center hole (2011), and an extension line of the connecting line, and both the first position (236) and the second position (237) are adjacent to the positive electrode sheet finishing end (218);
wherein a group margin of the battery cell (1) is 94% to 99%, a region at a surface of the second negative electrode current collector (23112) that is away from the center hole (2011) and located between the first position (236) and the second position (237) is a preset region (K), and the preset region (K) is continuously provided with a first insulating layer (25) along the winding direction (P).

2. The battery cell (1) according to claim 1, wherein a side of the first insulating layer (25) in a width direction exceeds or is aligned with a side of the second negative electrode current collector (23112) close to a positive electrode tab (2131);
the group margin is a ratio of a maximum diameter of the electrode assembly (20) to a maximum diameter of the housing (10) when the battery cell (1) is in a fully discharged state.

3. The battery cell (1) of claim 2, wherein,
along a height direction (H) of the winding structure (201), a width (h1) of the first insulating layer (25) is 12.5% to 37.5% of a width (h2) of the preset region (K); or,
an area of the first insulating layer (25) is 4% to 10% of an area of the preset region (K).

4. The battery cell (1) according to claim 2, wherein at a surface of the second negative electrode current collector (23112) facing away from the center hole (2011), the first insulating layer (25) is at least partially disposed between the second position (237) and the negative electrode sheet finishing end (238).

5. The battery cell (1) according to claim 1, wherein,
the first insulating layer (25) comprises a first substrate and a first adhesive layer located at a surface of the first substrate, and a material of the first substrate is PET or PI; and/or,
a number of the first insulating layer (25) located at the preset region (K) is one.

6. The battery cell (1) according to claim 1, wherein an outermost ring of the electrode assembly (20) further comprises an insulating film (28), and along the radial direction (R) of the winding structure (201), orthographic projections of the insulating film (28) and the first insulating layer (25) are not overlapped;
the insulating film (28) comprises a second substrate and a second adhesive layer located at a surface of the second substrate, and a material of the second substrate is PET or PI.

7. The battery cell (1) according to claim 1, wherein the positive electrode sheet (21) comprises a positive electrode current collector (211), and along a height direction (H) of the winding structure (201), the positive electrode current collector (211) comprises a positive electrode coated region (212) covered by a positive electrode active material layer (2111) and a positive electrode uncoated region (213) not covered by the positive electrode active material layer (2111), and the negative electrode current collector (231) comprises a negative electrode coated region (232) covered by the negative electrode current collector (2311) and a negative electrode uncoated region (233) not covered by the negative electrode current collector (2311);
the positive electrode uncoated region (213) comprises a positive electrode tab (2131) and a positive electrode connecting region (2132) connected between the positive electrode tab (2131) and the positive electrode coated region (212); the negative electrode uncoated region (233) comprises a negative electrode tab (2331) and a negative electrode connecting region (2332) connected between the negative electrode tab (2331) and the negative electrode coated region (232);
wherein at least a partial region of the positive electrode connecting region (2132) is covered with a second insulating layer (26); and/or, at least a partial region of the negative electrode connecting region (2332) is covered with a third insulating layer (27).

8. The battery cell (1) according to claim 1, wherein the housing (10) comprises a surrounding sidewall (11), an end of the sidewall (11) is formed with an opening (12); and an end of the housing (10) adjacent to the opening (12) comprises a crimping portion (30) recessed toward an interior of the housing (10);
the battery cell (1) further comprises:
a cover plate (40) mounted at the opening (12);
an insulating seal (50), wherein the insulating seal (50) is arranged around a periphery of the cover plate (40) to insulate and seal the cover plate (40) and the housing (10);
a current collecting plate (62) disposed between the electrode assembly (20) and the cover plate (40) and electrically connected to the housing (10), wherein a connecting piece of the current collecting plate (62) is located at a side of the crimping portion (30) facing the electrode assembly (20) and welded to the crimping portion (30);
and/or,
the battery cell (1) is a cylindrical battery;
and/or,
a maximum diameter of the housing (10) is 40 mm to 50 mm, and when the battery cell (1) is in a fully discharged state, a minimum distance between an outer periphery of the electrode assembly (20) and an inner surface of the housing (10) is in a range of 0.2 mm to 0.8 mm.

9. A battery pack (100), comprising the battery cell (1) according to any one of claims 1-8.

10. An electronic device (1000), comprising the battery pack (100) according to claim 9.
